# EUROPEAN PATENT SPECIFICATION

(11) **EP 2 427 777 B1**
(45) Date of publication and mention of the grant of the patent: **09.01.2019**
(21) Application number: 10772637.4
(22) Date of filing: 03.05.2010
(51) Int. Cl.: G01N 35/00, G01N 35/02

(54) **METHOD AND APPARATUS FOR LOW-VOLUME ANALYZER WITH FIXED AND VARIABLE INDEXING**
VERFAHREN UND VORRICHTUNG FÜR EIN NIEDRIGVOLUMEN-ANALYSEGERÄT MIT FESTER UND VARIABLER INDIZIERUNG
PROCÉDÉ ET APPAREIL POUR ANALYSEUR DE FAIBLE VOLUME AVEC INDEXAGE FIXE ET VARIABLE

(30) Priority: 06.05.2009 US 175864 P
(43) Date of publication of application: 14.03.2012
(73) Proprietor: Siemens Healthcare Diagnostics Products GmbH, 35041 Marburg (DE)
(72) Inventor: EVERS, Timothy, P., Wilmington DE 19808 (US); MICHELS, Thorsten, 64521 Gross-gerau (DE); PUFAHL, Holger, 65835 Liederbach (DE)
(74) Representative: Plate, Jürgen
(86) International application number: PCT/US2010/033350
(87) International publication number: WO 2010/129455

(56) References cited:
- WO-A1-2007/013960
- WO-A1-2007/013960
- US-A- 5 352 612
- US-A- 5 843 376
- US-A1- 2003 054 557
- US-A1- 2006 177 344
- US-A1- 2007 207 057

## Description

### BACKGROUND OF THE INVENTION

The present invention relates to sample analyzers and more particularly to sample analyzers that are adapted for improved reliability and reduced cost by using variable increment indexing.

In general, a sample analyzer automates a series of activities to determine the concentration or some other property of one or more analytes in one or more samples. An "assay" is typically executed in a reaction vessel or "cuvette". Typically, the assay process involves one or more of the following steps: addition of sample to cuvette, addition of one or more reagents to cuvette, mixing of cuvette contents, incubation of cuvette contents, detection of the resultant reaction at one or more points in time, and so forth. The sequence and timing of these critical activities differ for different assays in order to optimize analytical performance of each assay type. Variable "execution templates" result in more complex analyzer architectures in order to support variations when multiple assay types are intermixed in a single processor.

Automated sample analyzers are designed to provide high throughput in an efficient footprint. For example, U.S. Patent Number 5,352,612 to Huber, et al. discloses a sample analyzer having a movable sample support, e.g., a processor wheel, that includes an indexing drive. The indexing drive is adapted to advance the sample support a fixed distance based on the summation of one or more increments. For simplicity and by convention, an increment can refer to the time to increment, i.e., advance, rotate, shift, and the like, or to the increment distance or amount associated with moving a cuvette from a first cuvette holder position to a second cuvette holder position. Discrete equipment units are positioned around the periphery of the processor wheel at pre-determined cuvette holder positions to optimize the throughput.

More particularly, the processor wheel is rotated so that each cuvette disposed in the wheel advances stepwise around the periphery of the wheel in predefined sets of increments in accordance with a pre-established time schedule. According to the teachings of the Huber patent, each set of increments comprises plural discrete increments. In one embodiment, there are two increments. The first increment of the set corresponds to the total number of cuvette holder positions in the processor wheel (n) plus one, which is to say, n+1. For example, if the processor wheel has 90 cuvette holder positions, i.e., n = 90, then the first integer of the set of increments is 91. As a result, the increment always results in a complete revolution of the processor wheel plus one. The second increment of the set also results in another complete revolution of the processor wheel plus a number of additional cuvette holder positions that are determined formulaically.

The usefulness of the Huber processor, however, is restricted in that individual reaction vessels are presented to resources that are disposed around the periphery of the processor wheel in a fixed temporal pattern. Because of this limitation, relatively complex mechanisms are required, to process a given assay in other than a fixed template. Accordingly, it would be desirable to provide a simple and reliable sample analyzer that enables efficient processing of a multiplicity of assays having variable protocols or "execution templates". To enable this functionality, it would be desirable to provide a sample analyzer that allows variable incrementing, rather than the fixed incrementing taught by Huber. WO 2007/013960 A1 discloses a method for automated clinical analysis of biological fluid samples that uses discrete reaction cuvettes and allows simultaneous performance of assays. The cuvettes traverse a closed path, preferably a circular path of a cuvette ring. In order for a cuvette to receive fluid delivery or other function the cuvette ring rotates a predetermined amount during each time cycle. The ring can rotate incrementally an amount equivalent to one cuvette space during each time cycle. After delivery of fluid reagents to a cuvette, normally an incubation period is required. By moving a cuvette in the cuvette ring from an initial reference location variable distances to other selected locations for fluid delivery without waiting for fixed incremental ring movements in one direction, different incubation times can be provided between assay events that vary continuously (para. [0017]). By implementing variable movements of cuvettes in selected direction in a given time cycle, the number of fluid delivery stations can be reduced.

### SUMMARY OF THE INVENTION

A sample analyzer with fixed and variable indexing is disclosed. The analyzer is structured and arranged to align reaction vessels, e.g., cuvettes, at a pre-determined, fixed point while maintaining a positional sequence using variable indexing. Variable indexing allows cuvettes to be presented to multiple, fixed point resources at multiple occasions in a systematic progression in a highly efficient manner. The presentation of cuvettes to multiple, fixed point resources at multiple times is superior to existing indexing.

### DESCRIPTION OF THE DRAWINGS

The invention will be more fully understood by reference to the following Detailed Description of the invention in conjunction with the Drawings, of which:
Figure 1 shows an illustrative schematic of a 95-position sample analyzer in accordance with the present invention;
Figure 2 shows platform resource timing options for a 95-position, 1 position per index sample analyzer in accordance with the prior art;
Figure 3 shows platform resource timing options for a 95-position, 1 position per index sample analyzer having plural detectors in accordance with the prior art;
Figure 4 is a schematic view of the 95-position, 1 position per index sample analyzer of Figure 3;
Figure 5 shows resource timing options for a 95-position, 26 position per index sample analyzer in accordance with the prior art;
Figure 6 shows resource timing options for a 95-position, 121 position per index sample analyzer in accordance with the prior art;
Figure 7 is a schematic view of the platform described in Figures 5 and 6;
Figure 8 shows resource timing options for 95-position, 121 position per index sample analyzer that includes a divided incremental index in accordance with the present invention;
Figure 9 shows timing options for 95-position, 121 position per index sample analyzer that includes a divided incremental index with a single, fixed point resource in accordance with the present invention;
Figure 10 shows details of timing options for 95-position, net 121 position per index sample analyzer that includes a divided incremental index with a single, fixed point resource in accordance with the present invention; and
Figure 11 shows additional details of timing options for 95-position, net 121 position per index sample analyzer that includes a divided incremental index with a single, fixed point resource in accordance with the present invention.

### DETAILED DESCRIPTION

A method of controlling a sample analyzer using variable increment indexing and a sample analyzer having a variable indexing capability are disclosed. Inclusion of variable increment indexing enables more efficient use of resources, especially resources that are disposed or accessible only at fixed point locations such as sample probe stations, reagent probe stations, cuvette loading and unloading stations, detection stations, and the like. Before discussing the method and apparatus, the advantages of variable increment indexing will be illustrated.

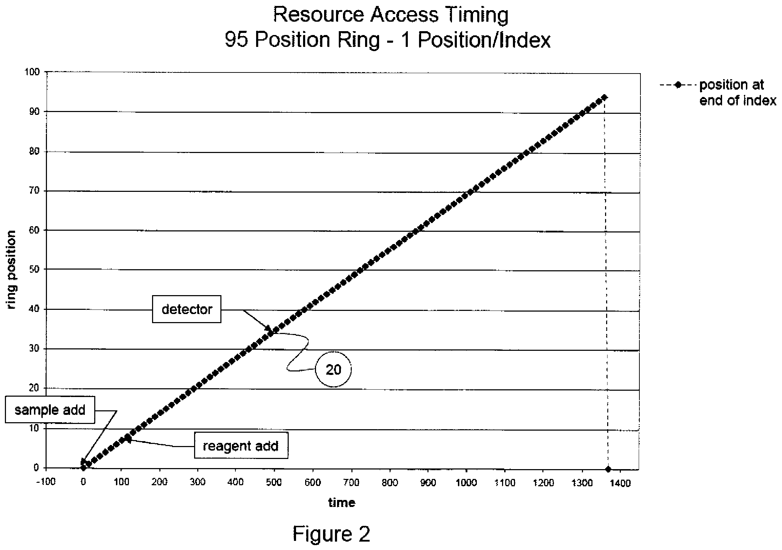

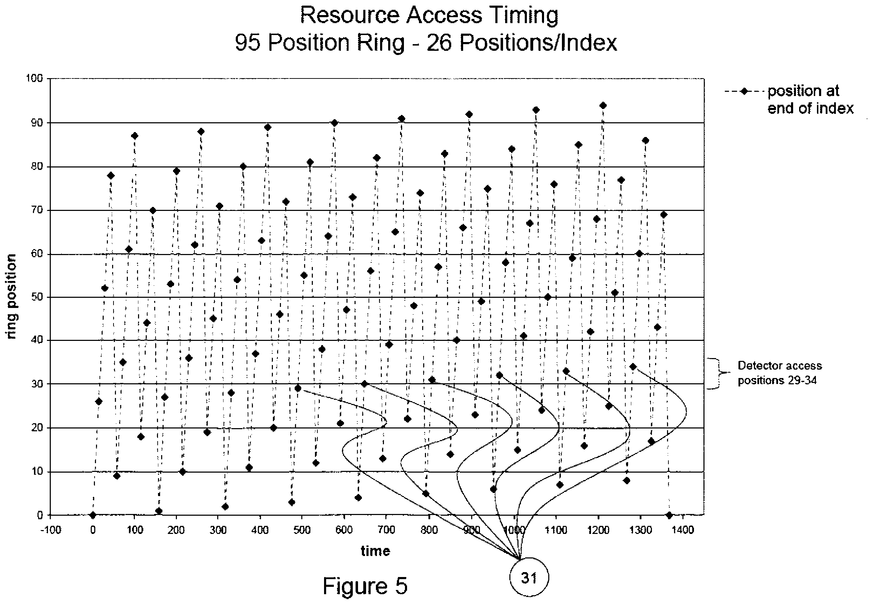

Resource timing options for a simple indexing 95-position platform and for a 95-position platform having a more complex index pattern are shown, respectively, in Figure 2 and Figure 5. In Figure 2, the indexing increment is fixed at one cuvette holder position per index, which is to say that each indexing event corresponds to the processor wheel advancing but a single increment to the next, adjacent position. As a result, during a complete cycle, resources that are disposed or only accessible at a single fixed point are only accessible by a given cuvette once. The opportunity to access a resource does not recur until the processor wheel has made a complete revolution; after all 95 indexing events.

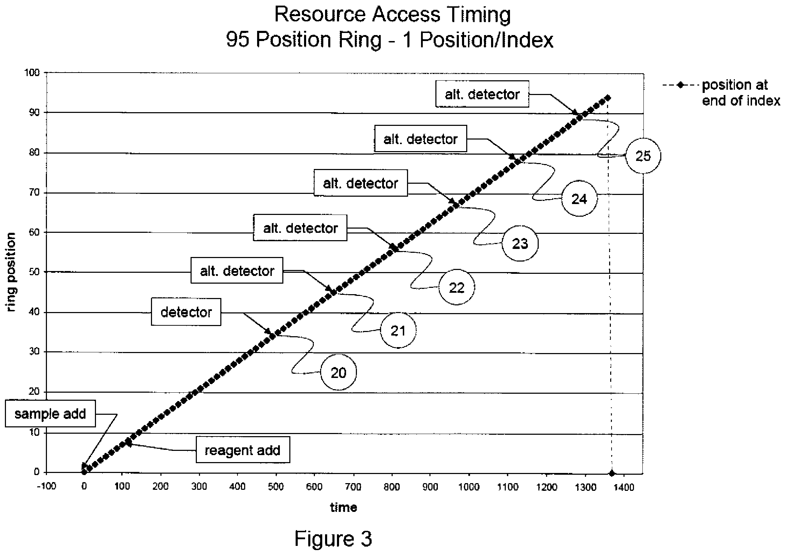

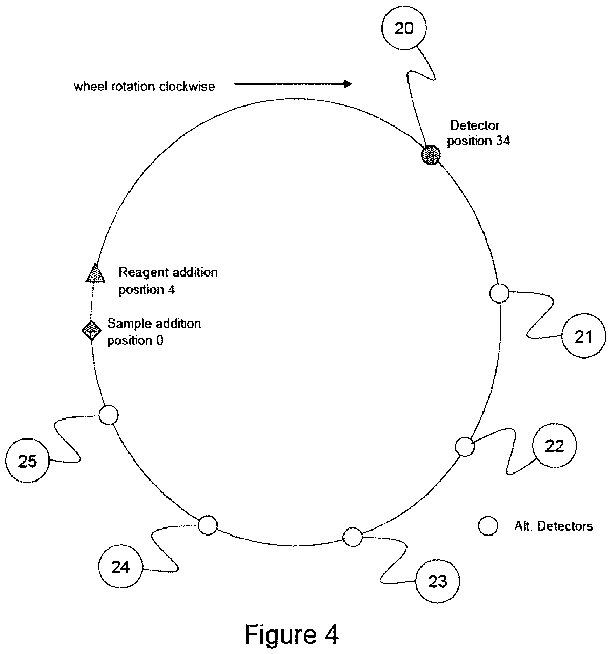

In the example presented in Figure 2, a detector resource 20 is only accessible once per cycle. If more frequent access to a detector is desired or required, then redundant detector resources 21, 22, 23, 24, and 25 must be added at various positions about the periphery of the wheel as shown in Figure 3 and in reaction ring schematic in Figure 4. Thus, incremental indexing from one cuvette holder position to an adjacent cuvette holder position is extremely limiting and can become expensive.

In contrast, Figure 5 shows fixed increment indexing in which the indexing increment is greater than one (1) but less than the total number of cuvette holder positions in the cuvette holding ring. For illustrative purposes only, the resource timing chart in Figure 5 is for a 95-position sample analyzer with a fixed, 26 positions per index increment.

As shown in FIG 5, when a correct combination of index size relative to the number of cuvette holder positions is selected, the reaction cuvette is brought proximate to, but not exactly to, the fixed location at various times 31 during the fixed indexing. For example, assuming that access to a detector resource is required at various and multiple times throughout the cycle, Figure 5 illustrates that there are several opportunities 31 in the region of cuvette holder positions 29-34 for detector access to the cuvette. Although more accessible than the example presented by Figure 2, a complex, multi-axis detector mechanism would be required to access the reaction cuvette at any one of cuvette holder positions 29-34 in this instance.

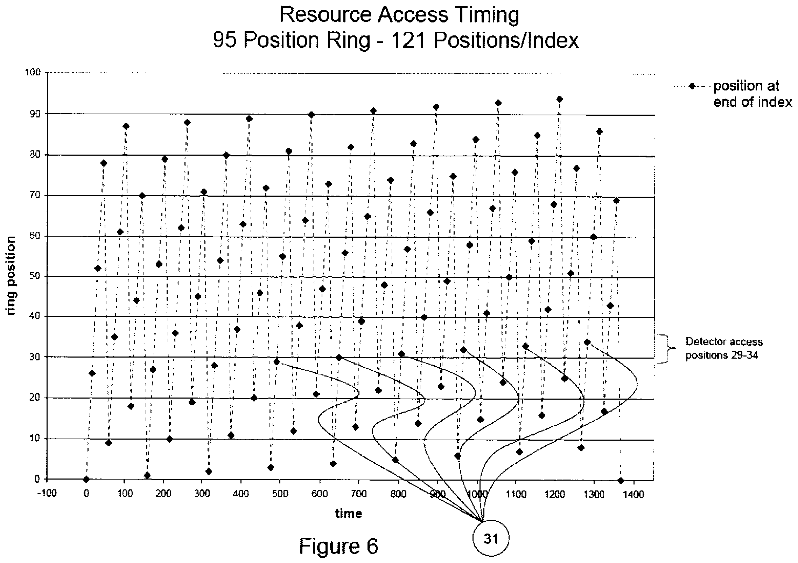

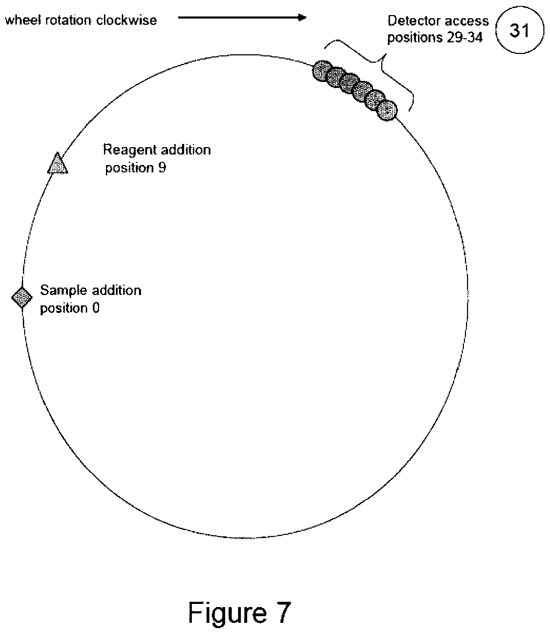

The same or similar indexing pattern can be achieved by indexing one full revolution in addition to the given indexing increment as illustrated in Figure 6. For this example, the indexing increment is 95 + 26 = 121. This may have application for use with detector types that are capable of measuring a cuvette while in motion. A schematic view of such a reaction ring illustrating the close positioning of the cuvette at multiple cuvette positions 31 (ring positions 29-34) is shown in Figure 7.

Although various fixed increment indexing schemes using an indexing increment size that exceeds the total number of ring holding positions may provide more potential opportunities or options for delivering a cuvette of interest to a particular resource disposed at a discrete ring position, a fixed indexing increment still limits the efficiency and throughput of the system analyzer, especially when resources are at fixed positions.

### Method and Advantages of Providing Variable Increment Indexing

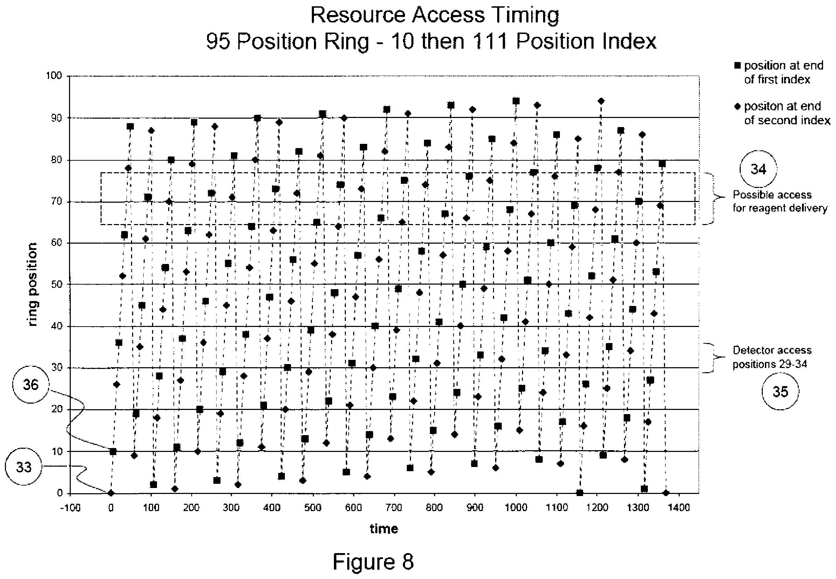

The disclosed method includes periodically dividing an otherwise fixed indexing increment to generate a plurality of (e.g., two or three) intermediate indexing increments of variable incremental lengths, the sum of which still equals the fixed indexing increment, e.g., 121 positions per increment. For the purpose of this disclosure and with respect to Figure 8, the first intermediate indexing increment 36 in the illustrative embodiment is equal to ten ring positions from a starting ring position 33. The choice of ten as the first intermediate indexing increment is arbitrary. Because the fixed indexing increment exceeds the total number of cuvette holding ring positions, the first intermediate indexing increment 36 can actually correspond either to a ten ring position increment or to a 105 ring position increment (95 + 10).

Figure 8 illustrates the benefit of dividing the total indexing increment into two or more intermediate indexing increments. Indeed, as shown in Figure 8, providing intermediate indexing increments 36 further increases the number of available or potential options or opportunities. This is true for groups of opportunities 34, such as for an angular reagent arm (between ring positions 65 and 77), as well as for fixed resources having a discrete, fixed point ring position such as a detector proximate ring position 29 (reference number 35 in Figure 8).

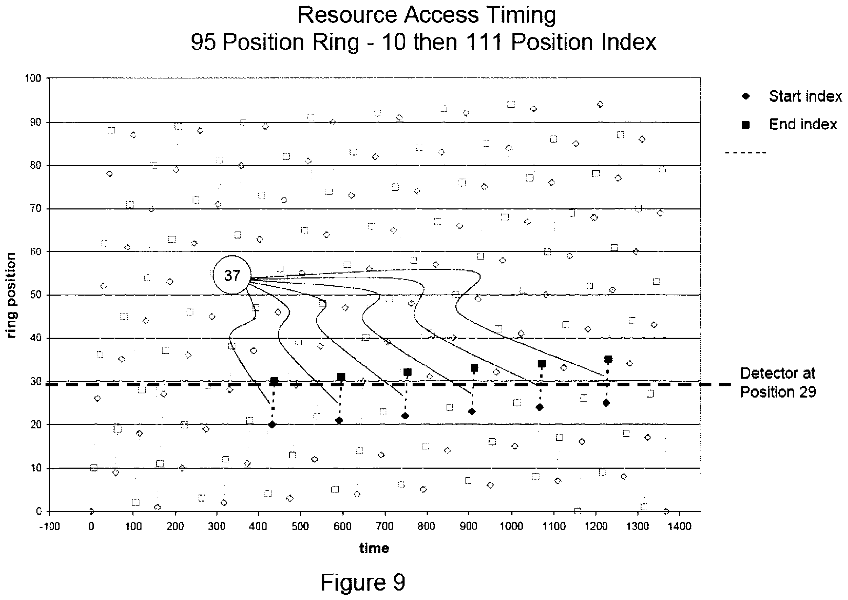

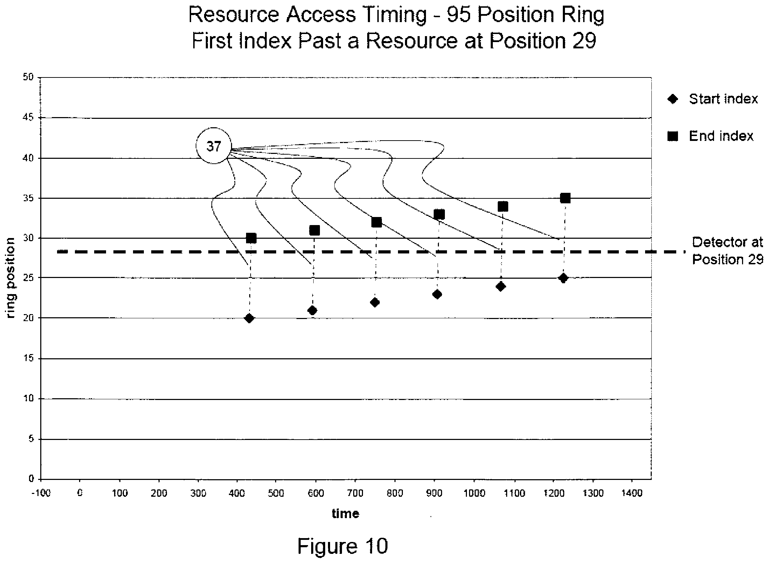

Indeed, as shown in Figure 9, including a first intermediate indexing increment of ten ring positions generates multiple instances 37 within the approximately 1300 second cycle when a reaction cuvette of interest passes the detector (at fixed point ring position 29). The number of opportunities or options 37 can be further and advantageously utilized, by varying the first intermediate indexing increment at discrete times during the approximately 1300 second cycle. As a result, as shown in Figure 10, more reaction cuvettes of interest can access the detector (at fixed point ring position 29) as described in greater detail below.

By further sub-dividing the first intermediate indexing increment 36 into sub-increments, one can optimize use of a discrete, fixed point resource, such as a detector. For ease of description, we will assume that the detector is fixedly disposed on the sample analyzer at ring position 29 and, moreover, that the sum of the sub-increments making up the first intermediate indexing increment is ten ring positions, realizing that just about any integer could be chosen.

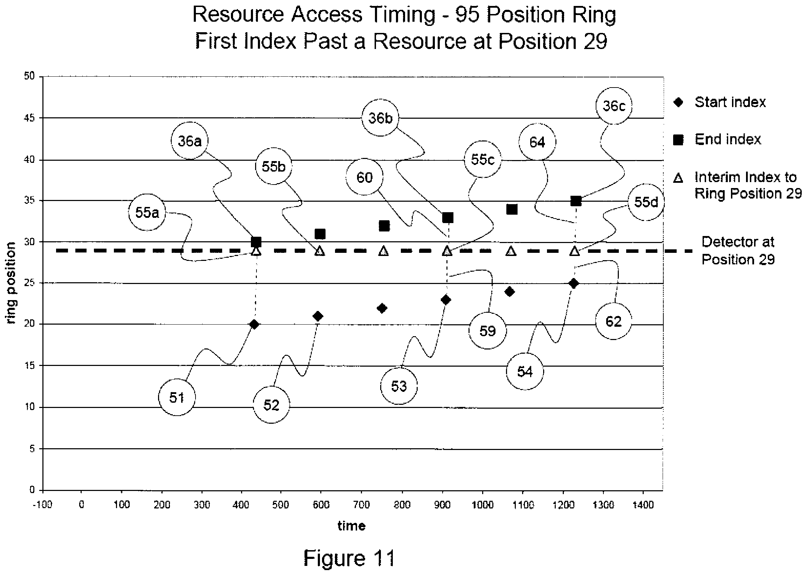

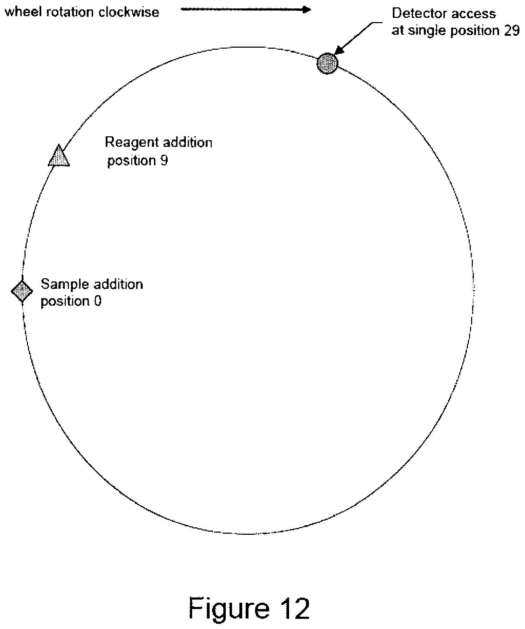

Table I summarizes intermediate indexing increments having variable indexing sub-increment lengths for six possible opportunities to access a detector at ring position 29. Reference number 51 in Figure 11 corresponds to a cuvette containing a prepared sample (Detect1) that has incubated for approximately seven and a half minutes (437 seconds versus a nominal time of 450 seconds) and that is ready for concentration measurement. Detect2 (reference number 52 in Figure 11) corresponds to a cuvette containing a prepared sample that has incubated for approximately ten minutes (596 seconds versus a nominal time of 600 seconds) and that is ready for concentration measurement. Detect4 (reference number 53 in Figure 11) corresponds to a cuvette containing a prepared sample that has incubated for approximately 15 minutes (912 seconds versus a nominal time of 900 seconds) and that is ready for concentration measurement. Detect6 (reference number 54 in Figure 11) corresponds to a cuvette containing a prepared sample that has incubated for approximately 20 minutes (1229 seconds versus a nominal time of 1200 seconds) and that is ready for concentration measurement and so on.

**TABLE I.**

| **READ TAG** | **START RING POSITION** | **INDEX TO RING POSITION 29 (N)** | **SUPPLEMENTAL INDEXING INCREMENT (M)** | **END OF INDEX RING POSITION** | **NOMINAL TIME (sec.)** |
|---|---|---|---|---|---|
| | | | | | |
| Detect1 | 20 | 9 | 1 | 30 | 437.4 |
| Detect2 | 21 | 8 | 2 | 31 | 595.8 |
| Detect3 | 22 | 7 | 3 | 32 | 754.2 |
| Detect4 | 23 | 6 | 4 | 33 | 912.6 |
| Detect5 | 24 | 5 | 5 | 34 | 1071.0 |
| Detect6 | 25 | 4 | 6 | 35 | 1229.4 |

According to the method of the present invention, indexing increments having first intermediate indexing increments 36 with variable indexing sub-increment lengths are automatically initiated once a cuvette containing a prepared sample is properly incubated and ready for measurement by the detector. The first sub-increment (corresponding to column three in Table I (N)) is adapted to transport the cuvette containing the prepared and incubated sample from a starting ring position 33 (Figure 8) to the fixed point detector (ring position 29).

For example, referring to Table I, from starting ring position 20 (point 51 in Figure 11), a cuvette can be indexed nine ring positions to the fixed point detector at ring position 29, which ring position is also referred to as an interim index ring position. From starting ring position 21 (point 52 in Figure 11), a cuvette can be indexed eight ring positions to interim index ring position 29 (point 55b in Figure 11). From starting ring position 23 (point 53 in Figure 11), a cuvette can be indexed six ring positions to interim index ring position 29 (point 55c in Figure 11). From starting ring position 25 (point 54 in Figure 11), a cuvette can be indexed four ring positions to interim index ring position 29 (point 55d in Figure 11).

In the example presented, the first sub-increments (N) of nine, eight, six, and four, respectively, are variable indexing increments that are greater than or equal to zero (0) and less than or equal to the first intermediate indexing increment. The first sub-increment (N) event includes transport of the cuvette to the fixed point detector at interim index ring position 29 and, optionally, can also include transfer of the cuvette from the cuvette holding ring to the detector or to a transfer wheel associated with the detector, for measurement. Preferably, transport of the cuvette to interim index ring position 29 occurs prior to the cuvette holding ring completing a first indexing revolution about its axis. However, transport of the cuvette to interim index ring position 29 (points 55a-55d) may also occur after the cuvette holding ring completes an indexing revolution about its axis.

The second sub-increment index (corresponding to column four in Table I (M)) corresponds to the supplemental indexing increment to the end position to which the cuvette would otherwise have been indexed but for the first sub-increment index. Accordingly, the second sub-increment index (M) is equal to the mathematical difference between the first intermediate indexing increment, which, for this example, is equal to 10, and the first sub-increment index (N), or M = 10 - N. The second sub-increment index (M) refers to a further, supplemental increment necessary to transport the cuvette containing the measured sample from interim index ring position 29 (points 55a-55d), e.g., the fixed point detector (at ring position 29), to the end ring position 36 (in Figure 8) of first intermediate indexing increment. The second sub-increment index (corresponding to column four in Table I) is used to account for the variable indexing increments, to synchronize the system.

For example, referring to Table I and Figure 11, when a reaction cuvette located at starting ring position 23 (point 53 in FIG 11) is properly incubated and ready for measurement of its concentration, the first intermediate indexing increment can be automatically sub-divided. The first sub-increment 59, which is six, is designed to transport a cuvette to interim index ring position 29 (point 55c in Figure 11). Subsequently, the second indexing sub-increment 60 needed to complete the first intermediate indexing increment of ten and to transport the cuvette from interim index ring position 29 (point 55c) to the end position 36b (at ring position 33 (23 + 10)) is four (33 - 29).

When a reaction cuvette located at starting ring position 25 (point 54 in Figure 11) is properly incubated and ready for measurement of its concentration, the first intermediate indexing increment can, instead, be automatically further sub-divided. The first sub-increment 62, which is four, is designed to transport a cuvette to interim index ring position 29 (point 55d in Figure 11). Subsequently, the second indexing sub-increment 64 needed to complete the first intermediate indexing increment of ten and to transport the cuvette from interim index ring position 29 (point 55d) to the end position 36c (at ring position 35 (25 + 10)) is six (35 - 29) .

For the two exemplary cases described immediately above, the variable second indexing sub-increment 60 and 64 includes transport of the reaction cuvette to the normal end position 36b and 36c. Optionally, prior to the variable second indexing sub-increment, the cuvette could be transferred from the detector back to the cuvette holding ring.

Although the above description positions reaction cuvettes for transfer to and from a detector or detection while remaining on the processing wheel, e.g., to detect the results of a chemistry reaction of the contents of the cuvette, those skilled in the art can appreciate that there are other operations that can be performed either on or outside of the cuvette processing wheel. For example, transferring cuvettes to and from a resource that is outside of or remote from the cuvette holding ring, e.g., an aliquot wheel or other device, can also be used to improve throughput and efficiency.

In a manner similar to that previously described hereinabove, additional transfers can be executed by dividing the indexing increment into a plurality of (two or three) intermediate indexing increments.

### Sample Analyzer

Having described a method for optimizing multiple sample analyses by using variable indexing, a sample analyzer and controller for the same will be described. Sample analyzers and the discrete resources used by sample analyzers are well-known to the art and will not be described in detail except in relation to the variable indexing attribute.

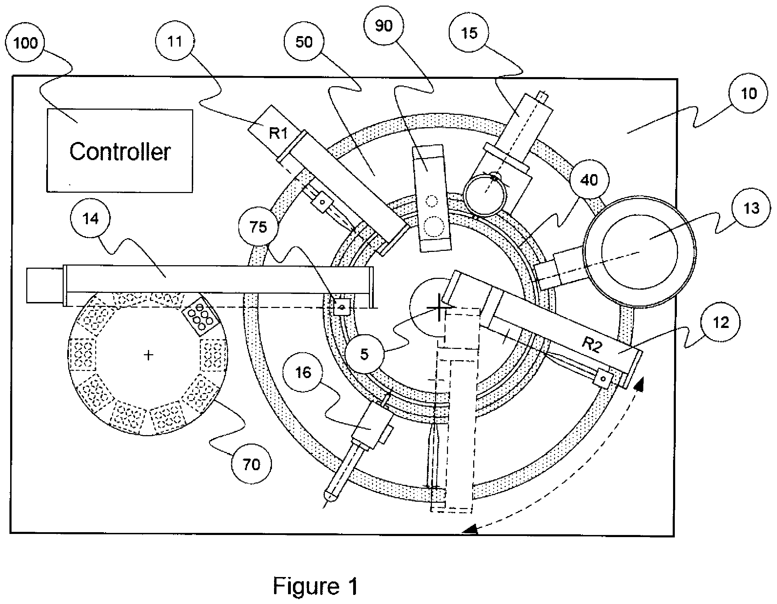

A sample analyzer embodiment in accordance with the present invention is shown in Figure 1. The embodied sample analyzer 10 includes at least one reaction cuvette holding ring 40, at least one reagent storing ring 50, a sample holding ring 70, a nephelometry or photometry position 90, and an additional detector position 15.

The embodiment shown in Figure 1 includes, *inter alia,* a fixed reagent transfer arm (R1) at a first reagent transfer position 11 (at ring position 9), an angular reagent transfer arm (R2) at a plurality of second reagent transfer positions 12 (generally between ring positions 60 and 78), a reaction cuvette loading position 13 (at ring position 51), a reaction cuvette unloading position 16 (at ring position 85), a sample transfer arm 14 (at ring position 0), and a detector position 15 (at ring position 29). Optionally or alternatively, the embodiment shown in Figure 1 can include, *inter alia,* a first angular reagent transfer arm (R1) at a plurality of first reagent transfer positions, a second angular reagent transfer arm at a plurality of second reagent transfer positions, a reaction cuvette loading position, a sample (or aliquot) transfer position, and a detector position.

The cuvette holding ring(s) 40 include an annular structure or wheel that is independently rotatable about a first axis 5. Each cuvette holding ring 40 is structured and arranged to include a plurality of cuvette holding positions (not shown) for holding reaction vessels, i.e., cuvettes. For this disclosure, the number of cuvette holding positions is 95 although other numbers are envisioned. The cuvette holding ring(s) 40 is coupled to a motor (not shown) and a controller 100. The controller 100 is adapted to operate the motor to produce a desired indexing rate. The motor is structured and arranged to rotate the cuvette holding ring 40 about the first axis 5.

Reaction cuvettes for holding at least one of a sample and reagent are loaded or inserted into empty cuvette holder positions in the cuvette holding ring(s) 40 at the cuvette loading position 13 using a cuvette transferring device. The controller 100 is adapted to present an empty cuvette holding position at the cuvette loading position 13 and to load or insert an unused and sanitary cuvette into the empty cuvette holding position.

Reaction cuvettes that have been tested are unloaded or otherwise removed from the cuvette holding ring(s) 40 at the cuvette unloading position 16 using a cuvette transferring device and properly disposed of. The controller 100 is adapted to present a used and measured reaction cuvette at the cuvette unloading position 16 and to unload or remove the reaction cuvette and its contents from the cuvette holding ring 40.

The reagent storing ring(s) 50 includes an independently rotatable annular device or wheel that is concentric and coaxial with the wheel of the cuvette holding ring 40. The reagent storing ring 50 is coupled to a motor (not shown) and to the controller 100. The controller 100 is adapted to operate the motor to rotate the reagent storing ring(s) 50 to present a discrete vessel containing a known reagent to a desired location. The motor is structured and arranged to rotate the reagent storing ring 50 about the first axis 5.

The reagent storing ring(s) 50 includes or is in operational communication with plural reagent arms (R1 and R2) and associated probes for aspirating reagent solution from vessels containing the reagent and for dispensing reagent solution into a reaction cuvette. At least one of the plural reagent arms is an angular reagent arm. For example, the embodiment shown in Figure 13 includes a fixed first reagent arm (R1) for dispensing a first reagent into the reaction cuvette at a fixed point 11 and an angular second reagent arm (R2) for dispensing a second reagent into the reaction cuvette.

In operation, the controller 100 is adapted to move the reagent storing ring(s) 50 during increment indexing to present a vessel containing a desired reagent to one of the reagent arms (R1, R2) and their associated probes. The controller 100 is further adapted to operate the reagent arms (R1, R2) and their associated probes to aspirate a volume of the desired reagent from a reagent-containing vessel and to dispense the extracted volume of the desired reagent into a desired reaction cuvette.

The sample holding ring 70 is structured and arranged for holding samples. The sample holding ring 70 includes an independently rotatable wheel having an axis of rotation that is parallel to the axis 5 of the cuvette holding ring 40. The sample holding ring 70 is structured and arranged to include a sample transfer arm 14 that includes a sample probe 75, which is adapted to aspirate a sample from a vessel containing the same and to dispense the sample into a reaction cuvette on the cuvette holding ring 40.

The sample holding ring 70 is operatively coupled to a motor (not shown) and to a controller 100. The motor is structured and arranged to rotate the sample holding ring 70 about the second axis. The controller 100 is adapted to operate the motor to rotate the sample holding ring 70 to present a discrete vessel containing a given sample to a desired location, e.g., proximate the sample probe 75. The controller 100 is further adapted to cause the sample probe 75 to aspirate a measured portion of the sample provided from a vessel containing the same and to dispense the sample directly into a reaction cuvette on the cuvette holding ring 40.

Nephelometry and photometry are techniques that are well known to the art for sample analysis and will not be described in detail. An optical nephelometer or photometer 90 is adapted to take readings of, e.g., scan, the contents of cuvettes residing in the cuvette holding ring 40 as the cuvette passes by the same during indexing. More specifically, each indexing is designed to exceed 360 degrees so that the optical nephelometer or photometer 90 may take readings of each cuvette during each revolution of the cuvette holding ring 40.

The embodied sample analyzer includes a controller 100 that is adapted to initiate variable incremental indexing at discrete times, to transport discrete reaction cuvettes that are awaiting an available resource that is disposed at a discrete, fixed point. More specifically, the controller 100 is adapted to divide an otherwise fixed indexing increment to generate a plurality of (e.g., two or three) intermediate indexing increments of variable incremental lengths, the sum of which still equals the fixed indexing increment, e.g., 121 positions per increment. The method of dividing the fixed indexing increment has been described hereinabove and will not be described further.

The controller 100 can be implemented as hardware or software or a combination of the two. In the case of the latter, the controller 100 includes a processing unit that is structured and arranged to execute at least one application, driver program, and the like, at least one input/output interface, and suitable memory, e.g., random access memory (RAM), for executing the at least one application, driver program, and the like, and read-only memory (ROM), for storing operational data, the at least one application, driver program, and the like.

In pertinent part, the controller 100 is adapted to identify discrete cuvettes containing a sample that is prepared for processing at an available resource disposed at a fixed point and to vary the otherwise fixed indexing increment to transport the discrete cuvette to the fixed point by dividing the fixed indexing increment into a plurality of intermediate indexing increments at least two of which have variable incremental lengths.

## Claims

1. A method of controlling a sample analyzer having a fixed number of reaction vessel holding positions, which are structured and arranged in a ring (40) that is rotatable, for accommodating reaction vessels and at least one fixed point resource, the method comprising:
indexing the sample analyzer about a respective axis of rotation by a fixed indexing increment that exceeds the fixed number of reaction vessel holding positions, **characterized in that** the indexing includes:
periodically dividing the fixed indexing increment into a plurality of intermediate indexing increments (36) having variable incremental lengths.

2. The method as recited in claim 1, wherein dividing the fixed indexing increment into a plurality of intermediate indexing increments includes dividing the fixed indexing increment into a fixed first intermediate indexing increment and a fixed second intermediate indexing increment.

3. The method as recited in claim 2, wherein dividing the fixed indexing increment into a fixed first intermediate indexing increment includes sub-dividing the fixed first intermediate indexing increment into a plurality of variable sub-increments.

4. The method as recited in claim 3, wherein sub-dividing the fixed first intermediate indexing increment into a plurality of variable sub-increments includes:
sub-dividing the fixed first intermediate indexing increment into a first variable sub-increment (N) that is less than or equal to the fixed first intermediate indexing increment (T); and
sub-dividing the fixed first intermediate indexing increment (T) further into a second variable sub-increment (M) that is equal to a mathematical difference between the fixed first intermediate indexing increment and the first variable sub-increment such that M = T - N.

5. The method as recited in claim 4, wherein sub-dividing the fixed first intermediate indexing increment into a first variable sub-increment includes indexing a discrete reaction vessel waiting for a discrete fixed point resource to a first ring position corresponding to the discrete fixed point resource whenever the discrete reaction vessel is located at a second ring position that is distant from said first ring position by a number of reaction vessel holding positions less than or equal to said fixed first intermediate indexing increment.

6. The method as recited in claim 5, wherein sub-dividing the fixed first intermediate indexing increment into a second variable sub-increment includes further indexing the discrete reaction vessel from the ring position corresponding to the fixed point resource an increment of M, to synchronize the sample analyzer.

7. A computer program product controlling a sample analyzer having a fixed number of reaction vessel holding positions for accommodating reaction vessels and at least one fixed point resource in the form of a computer readable media having a computer program stored thereon, the computer program being executable on a processor and comprising executable machine language or code for:
indexing the sample analyzer about its axis of rotation by a fixed indexing increment that exceeds the fixed number of reaction vessel holding positions, **characterized in that** the indexing includes:
periodically dividing the fixed indexing increment into a plurality of intermediate indexing increments (36) having variable incremental lengths.

8. The program product as recited in claim 7, wherein executable machine language or code for dividing the fixed indexing increment into a plurality of intermediate indexing increments includes dividing the fixed indexing increment into a fixed first intermediate indexing increment and a fixed second intermediate indexing increment.

9. The program product as recited in claim 8, wherein executable machine language or code for dividing the fixed indexing increment into a fixed first intermediate indexing increment includes sub-dividing the fixed first intermediate indexing increment into a plurality of variable sub-increments.

10. The program product as recited in claim 9, wherein executable machine language or code for sub-dividing the fixed first intermediate indexing increment (T) into a plurality of variable sub-increments includes:
sub-dividing the fixed first intermediate indexing increment (T) into a first variable sub-increment (N) that is less than or equal to the fixed first intermediate indexing increment (T); and
sub-dividing the fixed first intermediate indexing increment (T) further into a second variable sub-increment (M) that is equal to a mathematical difference between the fixed first intermediate indexing increment (T) and the first variable sub-increment (N) such that M = T - N.

11. The program product as recited in claim 10, wherein executable machine language or code for sub-dividing the fixed first intermediate indexing increment into a first variable sub-increment includes indexing a discrete reaction vessel waiting for a discrete fixed point resource to a first ring position corresponding to the discrete fixed point resource whenever the discrete reaction vessel is located at a second ring position that is distant from said first ring position by a number of reaction vessel holding positions less than or equal to said fixed first intermediate indexing increment.

12. The program product as recited in claim 11, wherein executable machine language or code for sub-dividing the fixed first intermediate indexing increment into a second variable sub-increment includes further indexing the discrete reaction vessel from the ring position corresponding to the fixed point resource an increment of M, to synchronize the sample analyzer.

13. A sample analyzer for analyzing concentration of a sample being tested, the sample analyzer comprising:
a reaction vessel holding ring (40) having a plurality of reaction vessels holder positions for holding reaction vessels and an axis of rotation;
a reagent storage ring (50) that is concentric and coaxial with the reaction vessel holding ring, for storing reagent vessels containing one of a plurality of reagents;
a resource that is disposed at a fixed point for performing some process on at least one of the reaction vessels;
a controller (100) that is adapted to move the reaction vessel holding ring according to a fixed indexing increment that exceeds the fixed number of reaction vessel holding positions and that is structured and arranged to substitute a plurality of intermediate indexing increments having variable incremental lengths for the fixed indexing increment in order to transport a discrete reaction vessel to an available resource without first executing the fixed indexing increment.

14. The sample analyzer as recited in claim 13, further comprising a plurality of reagent arms for transferring a reagent from a reagent-containing vessel to a reaction vessel, at least one of the plurality of reagent arms being an angular arm.

15. The sample analyzer as recited in claim 14, wherein a first reagent arm is a fixed arm and a second reagent arm is an angular arm.

16. The sample analyzer as recited in claim 14, wherein a first reagent arm is an angular arm and a second reagent arm is an angular arm.

17. The sample analyzer as recited in claim 13, the resource being selected from the group consisting of a photometer, an optical nephelometer, a reaction vessel loading, unloading or transfer device, an aliquot handling ring, and a chemiluminescence reader.

18. The sample analyzer as recited in claim 13, wherein the controller is adapted to sub-divide the fixed indexing increment into a first intermediate indexing increment and a second indexing increment, each of the first and second intermediate indexing increments having a fixed incremental length or a variable incremental length.

19. The sample analyzer as recited in claim 18, wherein the controller (100) is adapted to:
sub-divide the first intermediate indexing increment into a first variable sub-increment and a second variable sub-increment;
move the discrete reaction vessel by the first variable sub-increment to an intermediate index ring position that corresponds to the fixed position of the available resource;
after said discrete reaction vessel has been processed at the available resource, move the discrete reaction vessel by the second variable sub-increment to synchronize the sample analyzer; and
move the discrete reaction vessel by the second indexing increment.

## Patentansprüche

1. Verfahren zur Steuerung eines Probenanalysegeräts, das eine feste Anzahl von Reaktionsbehälteraufnahmepositionen, die in einem drehbaren Ring (40) zum Aufnehmen von Reaktionsbehältern ausgebildet und angeordnet sind, und mindestens eine Fixpunktressource aufweist, das Verfahren umfassend:
Indizieren des Probenanalysegeräts um eine jeweilige Rotationsachse durch ein festes Indexinkrement, das die feste Anzahl von Reaktionsbehälteraufnahmepositionen übersteigt, **dadurch gekennzeichnet, dass** das Indizieren umfasst:
periodisches Aufteilen des festen Indexinkrements in eine Vielzahl von Zwischenindexinkrementen (36), die variable Längenabstufungen aufweisen.

2. Verfahren nach Anspruch 1, wobei das Aufteilen des festen Indexinkrements in eine Vielzahl von Zwischenindexinkrementen das Aufteilen des festen Indexinkrements in ein festes erstes Zwischenindexinkrement und ein festes zweites Zwischenindexinkrement umfasst.

3. Verfahren nach Anspruch 2, wobei das Aufteilen des festen Indexinkrements in ein festes erstes Zwischenindexinkrement das Unterteilen des festen ersten Zwischenindexinkrements in eine Vielzahl von variablen Unterinkrementen umfasst.

4. Verfahren nach Anspruch 3, wobei das Unterteilen des
festen ersten Zwischenindexinkrements in eine Vielzahl von variablen Unterinkrementen umfasst:
Unterteilen des festen ersten Zwischenindexinkrements in ein erstes variables Unterinkrement (N), das kleiner oder gleich dem festen ersten Zwischenindexinkrement (T) ist; und
weiteres Unterteilen des festen ersten Zwischenindexinkrements (T) in ein zweites variables Unterinkrement (M), das gleich einer mathematischen Differenz zwischen dem festen ersten Zwischenindexinkrement und dem ersten variablen Unterinkrement ist, sodass M = T - N.

5. Verfahren nach Anspruch 4, wobei das Unterteilen des festen ersten Zwischenindexinkrements in ein erstes variables Unterinkrement das Indizieren eines diskreten Reaktionsbehälters, der auf eine diskrete Fixpunktressource wartet, auf eine erste Ringposition umfasst, die der diskreten Fixpunktressource entspricht, jeweils dann, wenn der diskrete Reaktionsbehälter sich an einer zweiten Ringposition befindet, die von der ersten Ringposition um eine Anzahl von Reaktionsbehälteraufnahmepositionen beabstandet ist, die kleiner oder gleich dem festen ersten Zwischenindexinkrement ist.

6. Verfahren nach Anspruch 5, wobei das Unterteilen des
festen ersten Zwischenindexinkrements in ein zweites variables Unterinkrement das weitere Indizieren des diskreten Reaktionsbehälters von der der Fixpunktressource entsprechenden Ringposition auf ein Inkrement von M umfasst, um das Probenanalysegerät zu synchronisieren.

7. Computerprogrammprodukt, das ein Probenanalysegerät steuert, das eine feste Anzahl von Reaktionsbehälteraufnahmepositionen zum Aufnehmen von Reaktionsbehältern und mindestens eine Fixpunktressource in der Form eines computerlesbaren Mediums mit einem darauf gespeicherten Computerprogramm aufweist, wobei das Computerprogramm auf einem Prozessor ausführbar ist und ausführbare Maschinensprache oder Code umfasst zum:
Indizieren des Probenanalysegeräts um seine Rotationsachse durch ein festes Indexinkrement, das die feste Anzahl von Reaktionsbehälteraufnahmepositionen übersteigt, **dadurch gekennzeichnet, dass** das Indizieren umfasst:
periodisches Aufteilen des festen Indexinkrements in eine Vielzahl von Zwischenindexinkrementen (36), die variable Längenabstufungen aufweisen.

8. Programmprodukt nach Anspruch 7, wobei die ausführbare Maschinensprache oder der Code für das Aufteilen des festen Indexinkrements in eine Vielzahl von Zwischenindexinkrementen das Aufteilen des festen Indexinkrements in ein festes erstes Zwischenindexinkrement und ein festes zweites Zwischenindexinkrement umfasst.

9. Programmprodukt nach Anspruch 8, wobei die ausführbare Maschinensprache oder der Code für das Aufteilen des festen Indexinkrements in ein festes erstes Zwischenindexinkrement das Unterteilen des festen ersten Zwischenindexinkrements in eine Vielzahl von variablen Unterinkrementen umfasst.

10. Programmprodukt nach Anspruch 9, wobei die ausführbare Maschinensprache oder der Code für das Unterteilen des festen ersten Zwischenindexinkrements (T) in eine Vielzahl von variablen Unterinkrementen umfasst:
Unterteilen des festen ersten Zwischenindexinkrements (T) in ein erstes variables Unterinkrement (N), das kleiner oder gleich dem festen ersten Zwischenindexinkrement (T) ist; und
weiteres Unterteilen des festen ersten Zwischenindexinkrements (T) in ein zweites variables Unterinkrement (M), das gleich einer mathematischen Differenz zwischen dem festen ersten Zwischenindexinkrement (T) und dem ersten variablen Unterinkrement (N) ist, sodass M = T - N.

11. Programmprodukt nach Anspruch 10, wobei die ausführbare Maschinensprache oder der Code für das Unterteilen des festen ersten Zwischenindexinkrements in ein erstes variables Unterinkrement das Indizieren eines diskreten Reaktionsbehälters, der auf eine diskrete Fixpunktressource wartet, auf eine erste Ringposition umfasst, die der diskreten Fixpunktressource entspricht, jeweils dann, wenn der diskrete Reaktionsbehälter sich an einer zweiten Ringposition befindet, die von der ersten Ringposition um eine Anzahl von Reaktionsbehälteraufnahmepositionen beabstandet ist, die kleiner oder gleich dem festen ersten Zwischenindexinkrement ist.

12. Programmprodukt nach Anspruch 11, wobei die ausführbare Maschinensprache oder der Code für das Unterteilen des festen ersten Zwischenindexinkrements in ein zweites variables Unterteilen das weitere Indizieren des diskreten Reaktionsbehälters von der der Fixpunktressource entsprechenden Ringposition auf ein Inkrement von M umfasst, um das Probenanalysegerät zu synchronisieren.

13. Probenanalysegerät zum Analysieren der Konzentration einer zu testenden Probe, wobei das Probenanalysegerät umfasst:
einen Reaktionsbehälteraufnahmering (40), der eine Vielzahl von Reaktionsbehälteraufnahmepositionen zum Aufnehmen von Reaktionsbehältern und eine Rotationsachse aufweist;
einen Reagenzspeicherring (50), der konzentrisch und koaxial zum Reaktionsbehälteraufnahmering angeordnet ist, zum Aufbewahren von Reagenzbehältern, die eines von einer Vielzahl von Reagenzien enthalten;
eine Ressource, die an einem Fixpunkt angeordnet ist, um einen Prozess an dem mindestens einen der Reaktionsbehälter durchzuführen;
eine Steuerung (100), die dazu vorgesehen ist, den Reaktionsbehälteraufnahmering gemäß einem festen Indexinkrement zu bewegen, das die feste Anzahl von Reaktionsbehälteraufnahmepositionen übersteigt, und die ausgebildet und angeordnet ist, um eine Vielzahl von Zwischenindexinkrementen, die variable Längenabstufungen aufweisen für das feste Indexinkrement zu ersetzen, um einen diskreten Reaktionsbehälter zu einer verfügbaren Ressource zu transportieren, ohne zuerst das feste Indexinkrement auszuführen.

14. Probenanalysegerät nach Anspruch 13, ferner umfassend eine Vielzahl von Reagenzarmen zum Übertragen eines Reagenz von einem Reagenz enthaltenden Behälter zu einem Reaktionsbehälter, wobei mindestens einer der mehreren Reagenzarme ein Winkelarm ist.

15. Probenanalysegerät nach Anspruch 14, wobei ein erster Reagenzarm ein fester Arm und ein zweiter Reagenzarm ein Winkelarm ist.

16. Probenanalysegerät nach Anspruch 14, wobei ein erster Reagenzarm ein Winkelarm und ein zweiter Reagenzarm ein Winkelarm ist.

17. Probenanalysegerät nach Anspruch 13, wobei die Ressource aus der Gruppe ausgewählt wird, die aus einem Fotometer, einem optischen Nephelometer, einer Lade-, Entlade- oder Transfervorrichtung für Reaktionsbehälter, einem Teilproben-Handhabungsring und einem Chemilumineszenzleser besteht.

18. Probenanalysegerät nach Anspruch 13, wobei die Steuerung dazu vorgesehen ist, das feste Indexinkrement in ein erstes Zwischenindexinkrement und ein zweites Zwischenindexinkrement zu unterteilen, wobei jedes von dem ersten und dem zweiten Zwischenindexinkrement eine feste Längenabstufung oder eine variable Längenabstufung aufweist.

19. Probenanalysegerät nach Anspruch 18, wobei die Steuerung (100) dazu vorgesehen ist, um:
das erste Zwischenindexinkrement in ein erstes variables Unterinkrement und ein zweites variables Unterinkrement zu unterteilen;
den diskreten Reaktionsbehälter um das erste variable Unterinkrement zu einer Zwischenindex-Ringposition zu bewegen, die der festen Position der verfügbaren Ressource entspricht;
nachdem der diskrete Reaktionsbehälter bei der verfügbaren Ressource verarbeitet wurde, den diskreten Reaktionsbehälter um das zweite variable Unterinkrement zu bewegen, um das Probenanalysegerät zu synchronisieren; und
den diskreten Reaktionsbehälter um das zweite Indexinkrement zu bewegen.

## Revendications

1. Procédé de commande d'un analyseur d'échantillon comportant un nombre fixe de positions de maintien de récipient de réaction, qui sont structurées et disposées dans un anneau (40) pouvant tourner, pour recevoir des récipients de réaction et au moins une ressource de point fixe, le procédé comprenant le fait :
d'indexer l'analyseur d'échantillon autour d'un axe de rotation respectif par un incrément d'indexation fixe qui dépasse le nombre fixe de positions de maintien de récipient de réaction, **caractérisé par le fait que** l'indexation comprend le fait de :
diviser périodiquement l'incrément d'indexation fixe en une pluralité d'incréments d'indexation intermédiaires (36) ayant des longueurs incrémentielles variables.

2. Procédé selon la revendication 1, dans lequel la division de l'incrément d'indexation fixe en une pluralité d'incréments d'indexation intermédiaire comprend une division de l'incrément d'indexation fixe en un premier incrément d'indexation intermédiaire fixe et un second incrément d'indexation intermédiaire fixe.

3. Procédé selon la revendication 2, dans lequel la division de l'incrément d'indexation fixe en un premier incrément d'indexation intermédiaire fixe comprend une sous-division du premier incrément d'indexation intermédiaire fixe en une pluralité de sous-incréments variables.

4. Procédé selon la revendication 3, dans lequel la sous-division du premier incrément d'indexation intermédiaire fixe en une pluralité de sous-incréments variables comprend le fait de :
sous-diviser le premier incrément d'indexation intermédiaire fixe en un premier sous-incrément variable (N) qui est inférieure ou égale au premier incrément d'indexation intermédiaire fixe (T) ; et
sous-diviser le premier incrément d'indexation intermédiaire fixe (T) davantage en un second sous-incrément variable (M) égal à une différence mathématique entre le premier incrément d'indexation intermédiaire fixe et le premier sous-incrément variable tel que M = T - N.

5. Procédé selon la revendication 4, dans lequel la sous-division du premier incrément d'indexation intermédiaire fixe en un premier sous-incrément variable comprend une indexation d'un récipient de réaction discret attendant une ressource de point fixe discrète dans une première position d'anneau correspondant à la ressource de point fixe discrète chaque fois que le récipient de réaction discret est situé au niveau de la seconde position d'anneau qui est distante de ladite première position d'anneau par un nombre de positions de maintien de récipient de réaction inférieur ou égal audit premier incrément d'indexation intermédiaire fixe.

6. Procédé selon la revendication 5, dans lequel la sous-division du premier élément d'indexation intermédiaire fixe en un second sous-incrément variable comprend une indexation supplémentaire du récipient de réaction discret à partir de la position d'anneau correspondant à la ressource de point fixe d'un incrément de M, pour synchroniser l'analyseur d'échantillon.

7. Produit de programme informatique commandant un analyseur d'échantillon comportant un nombre fixe de positions de maintien de récipient de réaction pour recevoir des récipients de réaction et au moins une ressource de point fixe sous la forme d'un support lisible par ordinateur ayant un programme informatique stocké sur celui-ci, le programme informatique étant exécutable sur un processeur et comprenant un code ou un langage exécutable par machine pour :
indexer l'analyseur d'échantillon autour de son axe de rotation par un incrément d'indexation fixe qui dépasse le nombre fixe de positions de maintien de récipient de réaction, **caractérisé par le fait que** l'indexation comprend le fait de :
diviser périodiquement l'incrément d'indexation fixe en une pluralité d'incréments d'indexation intermédiaires (36) ayant des longueurs incrémentielles variables.

8. Produit de programme selon la revendication 7, dans lequel un code ou un langage exécutable par machine pour diviser l'incrément d'indexation fixe en une pluralité d'incréments d'indexation intermédiaires comprend une division de l'incrément d'indexation fixe en un premier incrément d'indexation intermédiaire fixe et un second incrément d'indexation intermédiaire fixe.

9. Produit de programme selon la revendication 8, dans lequel un code ou un langage exécutable par machine pour diviser l'incrément d'indexation fixe en un premier incrément d'indexation intermédiaire fixe comprend une sous-division du premier incrément d'indexation intermédiaire fixe en une pluralité de sous-incréments variables.

10. Produit de programme selon la revendication 9, dans lequel un code ou un langage exécutable par machine pour sous-diviser le premier incrément d'indexation intermédiaire fixe (T) en une pluralité de sous-incréments variables comprend le fait de :
sous-diviser le premier incrément d'indexation intermédiaire fixe (T) en un premier sous-incrément variable (N) qui est inférieur ou égal au premier incrément d'indexation intermédiaire fixe (T) ; et
sous-diviser davantage le premier incrément d'indexation intermédiaire fixe (T) en un second sous-incrément variable (M) égale à une différence mathématique entre le premier incrément d'indexation intermédiaire fixe (T) et le premier sous-incrément variable (N) tel que M = T - N.

11. Produit de programme selon la revendication 10, dans lequel un code ou un langage exécutable par machine pour sous-diviser le premier incrément d'indexation intermédiaire fixe en un premier sous-incrément variable comprend une indexation d'un récipient de réaction discret attendant une ressource de point fixe discrète à une première position d'anneau correspondant à la ressource de point fixe discrète chaque fois que le récipient de réaction discret est situé à une seconde position d'anneau qui est distante de ladite première position d'anneau par un nombre de positions de maintien de récipient de réaction inférieur ou égal audit premier incrément d'indexation intermédiaire fixe.

12. Produit de programme selon la revendication 11, dans lequel un code ou un langage exécutable par machine pour sous-diviser le premier incrément d'indexation intermédiaire fixe en un second sous-incrément variable comprend une indexation supplémentaire du récipient de réaction discret de la position d'anneau correspondant à la ressource de point fixe un incrément de M, pour synchroniser l'analyseur d'échantillon.

13. Analyseur d'échantillon pour une analyse de la concentration d'un échantillon en test, l'analyseur d'échantillon comprenant :
un anneau de maintien de récipients de réaction (40) comportant une pluralité de positions de maintien de récipients de réaction pour maintenir des récipients de réaction et un axe de rotation ;
un anneau de stockage de réactif (50) qui est concentrique et coaxial avec l'anneau de maintien de récipient de réaction, pour stocker des récipients de réactif contenant l'un d'une pluralité de réactifs ;
une ressource qui est disposée à un point fixe pour effectuer un processus sur au moins un des récipients de réaction ;
un dispositif de commande (100) qui est adapté pour déplacer l'anneau de maintien de récipient de réaction selon un incrément d'indexation fixe qui dépasse le nombre fixe de positions de maintien de récipient de réaction et qui est structuré et disposé pour remplacer une pluralité d'incréments d'indexation intermédiaires ayant des longueurs incrémentielles variables pour les incréments d'indexation fixe afin de transporter un récipient de réaction discret à une ressource disponible sans exécuter au préalable l'incrément d'indexation fixe.

14. Analyseur d'échantillon selon la revendication 13, comprenant en outre une pluralité de bras de réactif pour transférer un réactif d'un récipient contenant un réactif à un récipient de réaction, au moins l'un des bras de réactif parmi la pluralité de bras de réactif étant un bras angulaire.

15. Analyseur d'échantillon selon la revendication 14, dans lequel un premier bras de réactif est un bras fixe et un second bras de réactif est un bras angulaire.

16. Analyseur d'échantillon selon la revendication 14, dans lequel un premier bras de réactif est un bras angulaire et un second bras de réactif est un bras angulaire.

17. Analyseur d'échantillon selon la revendication 13, la ressource étant choisie dans le groupe consistant en un photomètre, un néphélomètre optique, un dispositif de chargement, de déchargement ou de transfert de récipient de réaction, un anneau de maintien d'aliquote, et un lecteur de chimiluminescence.

18. Analyseur d'échantillon selon la revendication 13, dans lequel le dispositif de commande est agencé pour sous-diviser l'incrément d'indexation fixe en un premier incrément d'indexation intermédiaire et un second incrément d'indexation, chacun des premier et second incréments d'indexation intermédiaire ayant une longueur incrémentielle fixe ou une longueur incrémentielle variable.

19. Analyseur d'échantillons selon la revendication 18, dans lequel le dispositif de commande (100) est agencé pour :
sous-diviser le premier incrément d'indexation intermédiaire dans un premier sous-incrément variable et un second sous-incrément variable ;
déplacer le récipient de réaction discret par le premier sous-incrément variable vers une position d'anneau d'index intermédiaire qui correspond à la position fixe de la ressource disponible ;
après que ledit récipient de réaction discret a été traité au niveau de la ressource disponible, déplacer le récipient de réaction discret au second sous-incrément variable pour synchroniser l'analyseur d'échantillon ; et
déplacer le récipient de réaction discret au second incrément d'indexation.
